# EUROPEAN PATENT APPLICATION

(11) **EP 4 435 206 A1**
(43) Date of publication of application: **25.09.2024**
(21) Application number: 23751842.8
(22) Date of filing: 03.04.2023
(51) Int. Cl.: E04H 4/16

(54) **POOL CLEANING ROBOT**

(30) Priority: 06.02.2023 CN 202320121909 U
(71) Applicant: Xingmai Innovation Technology (Suzhou) Co., Ltd., Suzhou, Jiangsu 215000 (CN)
(72) Inventor: ZHANG, Shilei, Suzhou, Jiangsu 215000 (CN)
(74) Representative: Hahner, Ralph
(86) International application number: PCT/CN2023/086051
(87) International publication number: WO 2024/164418

(57) **Abstract**

Some embodiments of the present invention relate to a technical field of pool cleaning robots, and in particular to a pool cleaning robot. The pool cleaning robot includes a housing and a control board. The housing is internally disposed with a first sealed chamber. The control board is connected with the first sealed chamber through a suspension arm; the control board is disposed in a first direction, so that the control board is kept parallel to a bottom of the housing; and an inertial measurement unit (IMU) module is disposed on the control board, and an accelerometer and a gyroscope are disposed in the IMU module. The pool cleaning robot can improve an operation efficiency, flexibility, and applicability, and realize the objectives of saving on a cost and improving user experience.

## Description

### Technical Field

The present invention relates to a technical field of pool cleaning robots, and in particular to a pool cleaning robot.

### Background

With the economy developing and the technology advancing, a pool cleaning robot gradually takes a role in daily life and increasingly grows popular. A control board, a significant part of the pool cleaning robot, primarily serves to control the pool cleaning robot to work.

In the related art, it is common practice to vertically attach the control board of the pool cleaning robot to an inner wall of a housing. Accordingly, an accelerometer and a gyroscope on the control board fail to properly sense a real-time state of the pool cleaning robot or precisely determine a coordinate position of the pool cleaning robot. Therefore, a working efficiency of the pool cleaning robot is reduced, and a time cost is increased.

Aiming at the technical problem of the low working efficiency of the pool cleaning robot, a novel pool cleaning robot is to be provided immediately.

### Summary

An objective of the present invention is to provide a pool cleaning robot, so as to improve a working efficiency, save on a time cost, and improve user experience.

In order to realize the objective, some embodiments of the present invention employ the technical solutions as follows:
Some embodiments of the present invention provide a pool cleaning robot. The pool cleaning robot includes:
a housing, where the housing is internally disposed with a first sealed chamber; and
a control board, where the control board is connected with the first sealed chamber through a suspension arm; the control board is disposed in a first direction, so that the control board is kept parallel to a bottom of the housing; and an inertial measurement unit (IMU) module is disposed on the control board, and an accelerometer and a gyroscope are disposed in the IMU module.

In some embodiments, the pool cleaning robot includes at least two suspension arms.

In some embodiments, the pool cleaning robot includes a power supply assembly, where the power supply assembly is flatly laid in the first sealed chamber, the power supply assembly is positioned below the control board, and the power supply assembly is electrically connected with the control board.

In some embodiments, a preset distance is disposed between a lower end surface of the control board and an upper end surface of the power supply assembly, and the preset distance is set to be between 5 cm and 20 cm.

In some embodiments, the first sealed chamber includes an accommodation tank, and the power supply assembly is accommodated in the accommodation tank.

In some embodiments, an outer wall of the housing is disposed with an interactive connector, the interactive connector is electrically connected with the power supply assembly and/or the control board, and the interactive connector is configured to charge the power supply assembly and/or exchange information with the control board.

In some embodiments, the pool cleaning robot includes a water pump motor and an impeller, the water pump motor is disposed above the power supply assembly, an output end of the water pump motor extends out of the first sealed chamber, and the output end of the water pump motor is disposed with the impeller.

In some embodiments, the control board is disposed with an avoidance portion, and the avoidance portion is configured to avoid the water pump motor.

In some embodiments, the avoidance portion is in one of a cambered shape or a zigzag shape.

In some embodiments, a difference obtained by subtracting buoyancy of the entire pool cleaning robot from gravity of the entire pool cleaning robot is kept between 2 N and 8 N.

The present invention has at least the beneficial effects as follows:
Compared with the art known to inventors, the present invention provides the pool cleaning robot. The pool cleaning robot mainly includes the housing and the control board. The housing is internally provided with the first sealed chamber. The control board is connected to the first sealed chamber through the suspension arm; the control board is disposed in the first direction, so that the control board is kept parallel to the bottom of the housing; and the inertial measurement unit (IMU) module is disposed on the control board, and the accelerometer and the gyroscope are disposed in the IMU module. The control board is suspended and disposed in the first direction. Accordingly, various electrical elements are disposed on the control board. Moreover, a heat dissipation area can also be expanded, so that an upper end surface and a lower end surface of the control board can dissipate heat of the electrical elements, thereby improving a heat dissipation efficiency. The control board is disposed in the first direction, so as to be parallel to the bottom of the housing. In this way, the accelerometer and the gyroscope can properly and precisely sense acceleration and a direction of the pool cleaning robot, so as to accurately determine a position of the pool cleaning robot. That is, the gyroscope is disposed in the first direction, and thus can determine a reference point location and a three-dimensional coordinate axis. Then the accelerometer monitors acceleration of the pool cleaning robot in real time. A torquer enables the pool cleaning robot to perform accelerated or decelerated motion in a certain direction. Moreover, the accelerometer and the gyroscope can sense whether a front end or a rear end of the pool cleaning robot is tilted or pressed down, so that the pool cleaning robot can be suitable for pool bottom surfaces with different planeness. Therefore, an operation efficiency, flexibility, and applicability of the pool cleaning robot are improved, a cost is saved on, and user experience is improved.

### Brief Description of the Drawings

In order to describe the technical solutions in the embodiments of the present invention more clearly, the accompanying drawings required for describing the embodiments of the present invention are briefly described below. Obviously, the accompanying drawings in the following description are merely some embodiments of the present invention, and those of ordinary skill in the art can also derive other accompanying drawings from the contents in the embodiments of the present invention and these accompanying drawings without making creative efforts.
Fig. 1 illustrates a first schematic structural diagram of a pool cleaning robot according to some embodiments of the present invention;
Fig. 2 illustrates a side view of a pool cleaning robot according to some embodiments of the present invention;
Fig. 3 illustrates a sectional view in direction A-A in Fig. 2;
Fig. 4 illustrates a partial enlarged view of portion B in Fig. 3; and
Fig. 5 illustrates a second schematic structural diagram of a pool cleaning robot according to some embodiments of the present invention.

### Reference numerals:

100. housing; 110. first sealed chamber; 1101. accommodation tank; 1102. pressing plate; 120. second sealed chamber; 1201. liquid inlet; 1202. liquid outlet; 1203. filter screen; 1204. filter screen type cloth bag; 1205. counterweight block; 130. interactive connector; 140. ground cleaning rolling brush;
200. control board; 210. suspension arm; 220. avoidance portion;
300. power supply assembly;
400. water pump motor; and 410. impeller.

### Detailed Description of the Embodiments

The present invention will be further described in detail below with reference to the accompanying drawings and embodiments. It can be understood that the specific embodiments described herein are merely used to explain the present invention, rather than to limit same. In addition, it is further to be noted that for the convenience of description, only some structures related to the present invention rather than all structures are shown in the accompanying drawings.

In the description of the present invention, unless otherwise explicitly specified and defined, the terms "connected", "connection", and "fixed" should be understood in a broad sense. For example, a connection can be a fixed connection, a detachable connection, an integrated connection, a mechanical connection, an electric connection, a direct connection, an indirect connection via an intermediate medium, communication of structures inside two elements, or an interaction relation of two elements. For those of ordinary skill in the art, the specific meanings of the above terms in the present invention can be understood according to specific conditions.

In the present invention, unless otherwise explicitly specified and defined, a first feature is "on" or "underneath" a second feature can include that the first feature and the second feature are in direct contact, or in indirect contact through another feature there between. Moreover, the first feature is "on", "above", and "over" the second feature includes that the first feature is right above or obliquely above the second feature, or merely indicates that the first feature has a higher level than the second feature. The first feature is "underneath", "below", and "under" the second feature includes that the first feature is right below or obliquely below the second feature, or merely indicates that the first feature has a lower level than the second feature.

In the description of the present invention, the orientation or position relations indicated by the terms "upper", "lower", "left", "right", etc. are based on the orientation or position relations shown in the accompanying drawings, merely for facilitating the description and simplifying the operation, rather than indicating or implying that a device or element referred to must have a particular orientation or be constructed and operated in a particular orientation, and therefore cannot be interpreted as limiting the present invention. In addition, the terms "first" and "second" are merely used to distinguish in description and have no special meanings.

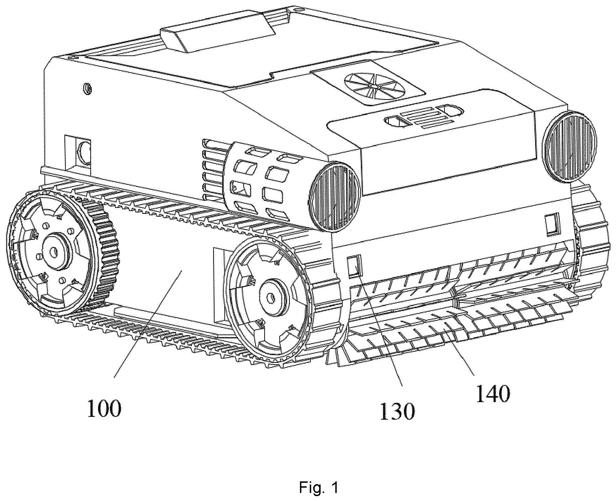

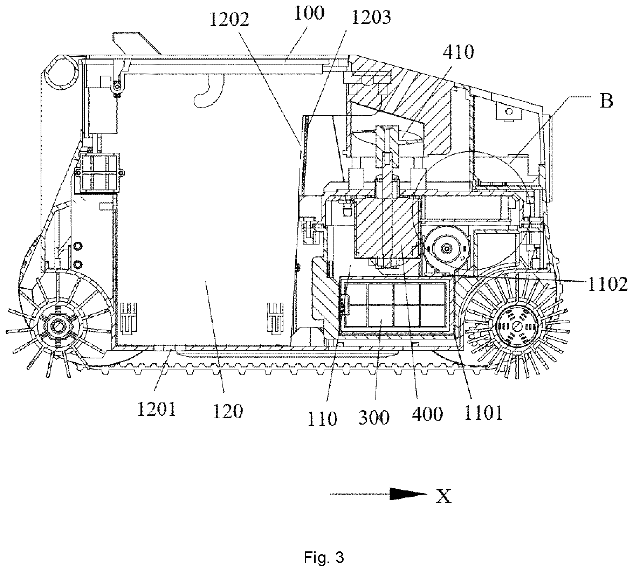

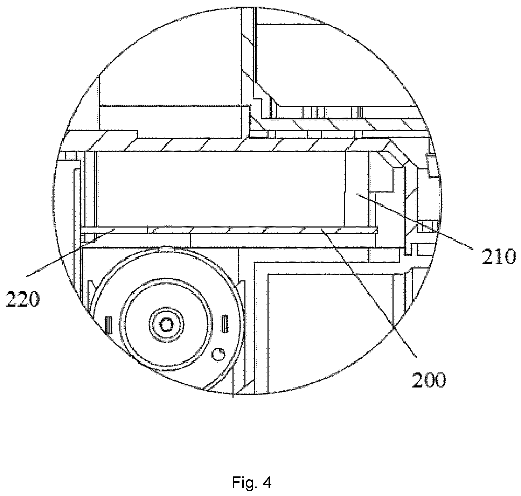

As shown in Figs. 1-4, some embodiments of the present invention provide a pool cleaning robot. The pool cleaning robot mainly includes a housing 100 and a control board 200. The housing 100 is internally disposed with a first sealed chamber 110. The control board 200 is connected with the first sealed chamber 110 through a suspension arm 210; the control board 200 is disposed in a first direction, so that the control board 200 is kept parallel to a bottom of the housing 100; and an inertial measurement unit (IMU) module is disposed on the control board 200, and an accelerometer and a gyroscope are disposed in the IMU module. Illustratively, the suspension arm 210 is connected with a top of the first sealed chamber 110, or a bottom of the first sealed chamber 110, as long as it is ensured that the control board 200 is disposed in a first direction. It is to be noted that in some embodiments, the first direction is an X-axis direction in Fig. 3. In other words, the control board 200 is disposed parallel to a bottom of the first sealed chamber 110. That is, when the pool cleaning robot is placed horizontally, the control board 200 is in a horizontal state.

Based on the above design, in some embodiments, at least two suspension arms 210 are disposed and the two adjacent suspension arms 210 are disposed at equal intervals. In some embodiments, four suspension arms 210 are disposed, and the four suspension arms 210 are positioned at corners of the control board 200, respectively, thereby improving the stability and reliability of the control board 200. In addition, the control board 200 is suspended and horizontally disposed. Therefore, various electrical elements are disposed on the control board 200. Moreover, a heat dissipation area can also be expanded, so that an upper end surface and a lower end surface of the control board 200 can dissipate heat of the electrical elements, thereby improving a heat dissipation efficiency.

In some embodiments, the control board 200 is a printed circuit board (PCB). The control board 200 is horizontally disposed, so that the control board 200 is parallel to the bottom of the housing 100. In this way, the accelerometer and the gyroscope can properly and precisely sense acceleration and a direction of the pool cleaning robot, thereby accurately determining a position of the pool cleaning robot. That is, the gyroscope is horizontally disposed, and thus can determine a reference point location and a three-dimensional coordinate axis. Then the accelerometer monitors acceleration of the pool cleaning robot in real time. A torquer enables the pool cleaning robot to perform accelerated or decelerated motion in a certain direction. Moreover, the accelerometer and the gyroscope can sense whether a front end or a rear end of the pool cleaning robot is tilted or pressed down, so that the pool cleaning robot can be suitable for pool bottom surfaces with different planeness. Therefore, an operation efficiency, flexibility, and applicability of the pool cleaning robot are improved, and a cost is saved on.

It is to be noted that in some embodiments, the specific working principles of the accelerometer and the gyroscope are as in the related art, which will not be further repeated in the embodiments.

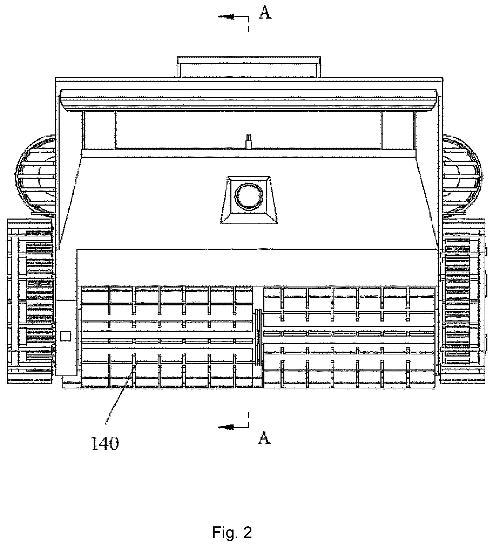

As shown in Figs. 2-4, in some embodiments, the pool cleaning robot includes a power supply assembly 300, where the power supply assembly 300 is flatly laid in the first sealed chamber 110, the power supply assembly 300 is positioned below the control board 200, and the power supply assembly 300 is electrically connected with the control board 200. Since the power supply assembly 300 is heavy, a center of gravity of the pool cleaning robot is lowered by disposing the power supply assembly 300 below the control board 200. Accordingly, the stability of the pool cleaning robot is improved. Certainly, in some embodiments, the power supply assembly 300 is disposed at the same height as the control board 200, or is disposed in other layout manners, which will not be excessively described herein.

Moreover, the power supply assembly 300 is disposed in the first sealed chamber 110, so that the power supply assembly 300 is built in the pool cleaning robot. In this way, a weight of the pool cleaning robot is increased, so that the pool cleaning robot can sink to the bottom of a pool for cleaning easily.

In some alternative embodiments, a preset distance is disposed between the lower end surface of the control board 200 and the upper end surface of the power supply assembly 300, and the preset distance is set to be between 5 cm and 20 cm. In some embodiments, the preset distance is set to 5 cm, 8 cm, 10 cm, 20 cm, etc. Except for being configured to mount the electrical elements, the preset distance also facilitates heat dissipation of the control board 200. Therefore, the heat dissipation area is expanded, the heat dissipation efficiency is improved, and the service life of the control board 200 is prolonged.

In some alternative embodiments, as shown in Fig. 3, the first sealed chamber 110 includes an accommodation tank 1101, and the power supply assembly 300 is disposed in the accommodation tank 1101. In some embodiments, the accommodation tank 1101 is disposed on a bottom of the first sealed chamber 110. The accommodation tank 1101 is disposed to improve the stability of the power supply assembly 300 and prevent the power supply assembly 300 from vibrating and even jumping when the pool cleaning robot works. In some embodiments, the accommodation tank 1101 is rectangular, so as to match the shape of the power supply assembly 300.

In some embodiments, a buffer cushion is disposed between the power supply assembly 300 and a side wall of the accommodation tank 1101, so as to further reduce the shock of the power supply assembly 300. Therefore, the stability of the power supply assembly 300 is improved, and the service life is prolonged.

In some embodiments, as shown in Fig. 3, a pressing plate 1102 is disposed on an inner wall of the first sealed chamber 110, and the pressing plate 1102 is configured to press the power supply assembly 300. The power supply assembly 300 is prevented from jumping up and down during working. Therefore, the stability, reliability, and safety of the power supply assembly 300 are improved.

In some alternative embodiments, the pool cleaning robot further includes a buoyancy unit, where the buoyancy unit is disposed in the housing 100, and a water inlet and a water outlet are provided on the buoyancy unit. The buoyancy unit keeps a difference obtained by subtracting buoyancy of the entire pool cleaning robot from gravity of the entire pool cleaning robot between 2 N and 8 N by controlling a water inlet amount. In some embodiments, the difference is set to 2 N, 3 N, 5 N, 8 N, etc. The buoyancy unit is disposed, so that the pool cleaning robot can operate on a water surface and clear garbage on the water surface. Specifically, the buoyancy unit adjusts the buoyancy of the pool cleaning robot to make the borne buoyancy equal to the gravity of the pool cleaning robot, so that the pool cleaning robot can stably operate on the water surface.

In some embodiments, the buoyancy unit includes a water inlet pump and a water outlet pump, wherein the water inlet pump is in communication with the water inlet, and the water outlet pump is in communication with the water outlet. The water inlet pump and the water outlet pump are controlled by the control board 200. When the pool cleaning robot is required to sink, an operator can control the water inlet pump to be turned on and the water outlet pump to be turned off on the ground in a wireless remote control manner. The water inlet pump injects water into the buoyancy unit, so that the gravity of the entire pool cleaning robot is gradually increased, and the pool cleaning robot can smoothly dive to a predetermined position. Similarly, when the pool cleaning robot is required to float upwards, an operator can control the water outlet pump to be turned on and the water inlet pump to be turned off on the ground in a wireless remote control manner. The water outlet pump discharges water from the buoyancy unit, so that the gravity of the entire pool cleaning robot is gradually reduced, and the pool cleaning robot can smoothly float upwards to a predetermined position.

In addition, in some embodiments, the power supply assembly 300 is disposed inside the housing 100, so that the difference obtained by subtracting the buoyancy of the entire pool cleaning robot from the gravity of the entire pool cleaning robot and required by the pool cleaning robot can be rapidly prepared. Therefore, a time for the water inlet pump to inject water into the buoyancy unit is shortened, and the working efficiency is improved. Moreover, the size of the buoyancy unit can also be reduced, so as to miniaturize the pool cleaning robot, and a user can take the pool cleaning robot conveniently.

In some embodiments, a size ratio of the buoyancy unit to the housing 100 is 0.15-0.45. In some embodiments, the size ratio is set to 0.15, 0.20, 0.30, 0.40, 0.45, etc.

As shown in Fig. 1, in some embodiments, an outer wall of the housing 100 is disposed with an interactive connector 130, where the interactive connector 130 is electrically connected with the power supply assembly 300 and/or the control board 200, and the interactive connector 130 is configured to charge the power supply assembly 300 and/or exchange information with the control board 200. In some embodiments, two or more interactive connectors 130 are provided. The interactive connectors 130 are provided with waterproof silicone covers.

As shown in Fig. 3, in some embodiments, the housing 100 is internally disposed with a second sealed chamber 120, wherein a liquid inlet 1201 and a liquid outlet 1202 are disposed on the second sealed chamber 120, a filter screen 1203 is disposed at the liquid outlet 1202, and the liquid outlet 1202 is in communication with an exterior of the housing 100. In some embodiments, a water pump motor 400 is disposed above the power supply assembly 300, an output end of the water pump motor 400 extends out of the first sealed chamber 110, and the output end of the water pump motor 400 is provided with an impeller 410. When the pool cleaning robot is placed in the pool, water in the pool is automatically injected into the second sealed chamber 120 through the liquid inlet 1201, and then flows out through the liquid outlet 1202 after being filtered through the filter screen 1203. In this case, the water pump motor 400 drives the impeller 410 to rotate, so as to increase the flow rate of water at the liquid outlet 1202. Therefore, an efficiency of clearing sewage in the pool by the pool cleaning robot is improved.

In some embodiments, the control board 200 is disposed with an avoidance portion 220, and the avoidance portion 220 is configured to avoid the water pump motor 400. In some embodiments, the avoiding portion 220 is in one of a cambered shape or a zigzag shape. The avoidance portion 220 is disposed to facilitate mounting of the water pump motor 400.

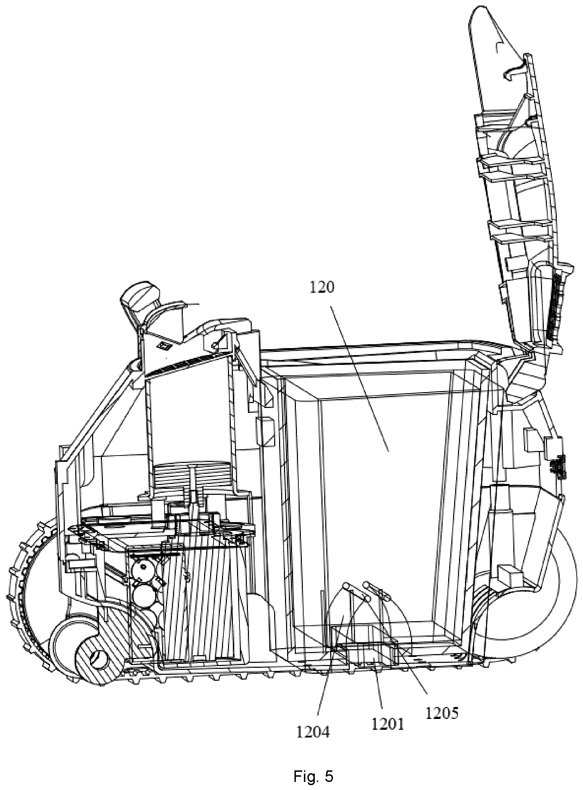

In some embodiments, as shown in Fig. 5, two filter screen type cloth bags 1204 sleeve the liquid inlet 1201 of the second sealed chamber 120, and the filter screen type cloth bags 1204 are disposed in an opened manner. That is, the two filter screen type cloth bags 1204 are disposed at the liquid inlet 1201 in a bilateral symmetry manner and do not completely block the liquid inlet 1201. Moreover, each of the two filter screen type cloth bags 1204 is disposed with a counterweight block 1205. When the pool cleaning robot enters the water, the filter screen type cloth bags 1204 at the liquid inlet 1201 are automatically opened under the tension of the water, so as to ensure that the water can enter the pool cleaning robot. When the pool cleaning robot stops working, owing to the gravity, the counterweight block 1205 automatically fall to block the liquid inlet 1201. Therefore, it is ensured that sewage in the second sealed chamber 120 will not flow out from the liquid inlet 1201. Each of the two filter screen type cloth bags 1204 is disposed with the counterweight block 1205, so that the water inlet speed of the pool cleaning robot can be increased, and the sewage can also avoid flowing reversely. Therefore, the working efficiency of the pool cleaning robot is improved.

In some embodiments, the housing 100 is disposed with a drum, wherein waterproof rubber is bonded to an outer peripheral side of the drum. The waterproof rubber is detachably bonded to the drum, and the sewage in the pool can adhere to the waterproof rubber. In some embodiments, the drum is disposed with a mounting hole, wherein the mounting hole is detachably disposed with a hair-planted brush. The user can mount different types of hair-planted brushes on the mounting hole as actually required, thereby improving the flexibility and applicability of the pool cleaning robot. Certainly, the operator can also flexibly arrange other types of hair brushes as actually required. It is ensured that the hair brush is detachably connected to the drum. Therefore, the user flexibly replaces the hair brush according to his/her own requirements, which will not be excessively described herein.

In some alternatively embodiments, with reference to Fig. 3 continuously, in order to prevent the impeller 410 from sucking gas into the housing 100, the impeller 410 is disposed behind a front wheel in an advancing direction of the pool cleaning robot. In this way, when the pool cleaning robot cleans a side wall of the pool, the operator is required to ensure that a position of the front wheel is not higher than the water surface. Therefore, the situation that the working efficiency is influenced because the impeller 410 is exposed from the water surface to suck air is avoided. In some embodiments, in actual use, the housing 100 is disposed with two ground cleaning rolling brushes 140, and the two ground cleaning rolling brushes 140 are positioned at the position of the front wheel and a position of a rear wheel, respectively. The operator is only required to ensure that an axial position of the ground cleaning rolling brush 140 at the front wheel is not exposed from the water surface, so as to ensure that the impeller 410 will not suck air into the pool cleaning robot. Therefore, the working efficiency of the pool cleaning robot is improved.

In some embodiments, a weight of the power supply assembly 300 is set to 1.0 kg-1.3 kg, a weight of the water pump motor 400 is set to 0.3 kg-0.5 kg, and a drainage volume of the second sealed chamber is set to 8 L-15 L.

It should be noted that the basic principles, main features, and advantages of the present invention are shown and described above. Those skilled in the art should understand that the present invention is not limited to the above embodiments, and the above embodiments and the descriptions in the description are merely illustrative of the principles of the present invention. Various changes and improvements can also be made to the present invention without departing from the spirit and scope of the present invention. These changes and improvements fall within the claimed scope of the present invention. The claimed scope of the present invention is defined by the appended claims and their equivalents.

## Claims

1. A pool cleaning robot, comprising:
a housing (100), wherein the housing (100) is internally disposed with a first sealed chamber (110); and
a control board (200), wherein the control board (200) is connected with the first sealed chamber (110) through a suspension arm (210); the control board (200) is disposed in a first direction, so that the control board (200) is kept parallel to a bottom of the housing (100); and
an inertial measurement unit (IMU) module is disposed on the control board (200), and an accelerometer and a gyroscope are disposed in the IMU module.

2. The pool cleaning robot as claimed in claim 1, wherein the pool cleaning robot comprises at least two suspension arms (210).

3. The pool cleaning robot as claimed in claim 1, comprising a power supply assembly (300), wherein the power supply assembly (300) is flatly laid in the first sealed chamber (110), the power supply assembly (300) is positioned below the control board (200), and the power supply assembly (300) is electrically connected with the control board (200).

4. The pool cleaning robot as claimed in claim 3, wherein a preset distance is disposed between a lower end surface of the control board (200) and an upper end surface of the power supply assembly (300), and the preset distance is set to be between 5 cm and 20 cm.

5. The pool cleaning robot as claimed in claim 3, wherein the first sealed chamber (110) comprises an accommodation tank (1101), and the power supply assembly (300) is accommodated in the accommodation tank (1101).

6. The pool cleaning robot as claimed in claim 3, wherein an outer wall of the housing (100) is disposed with an interactive connector (130), the interactive connector (130) is electrically connected with the power supply assembly (300) and/or the control board (200), and the interactive connector (130) is configured to charge the power supply assembly (300) and/or exchange information with the control board (200).

7. The pool cleaning robot as claimed in claim 3, wherein the pool cleaning robot comprises a water pump motor (400) and an impeller (410), the water pump motor (400) is disposed above the power supply assembly (300), an output end of the water pump motor (400) extends out of the first sealed chamber (110), and the output end of the water pump motor (400) is disposed with the impeller (410).

8. The pool cleaning robot as claimed in claim 7, wherein the control board (200) is disposed with an avoidance portion (220), and the avoidance portion (220) is configured to avoid the water pump motor (400).

9. The pool cleaning robot as claimed in claim 8, wherein the avoidance portion (220) is in one of a cambered shape or a zigzag shape.

10. The pool cleaning robot as claimed in any one of claims 1-9, wherein a difference obtained by subtracting buoyancy of the entire pool cleaning robot from gravity of the entire pool cleaning robot is kept between 2N and 8N.
